# EUROPEAN PATENT SPECIFICATION

(11) **EP 2 048 959 B1**
(45) Date of publication and mention of the grant of the patent: **07.09.2011**
(21) Application number: 07736627.6
(22) Date of filing: 11.07.2007
(51) Int. Cl.: A22C 17/00, A23B 4/28, B01D 33/06

(54) **AN APPARATUS FOR INJECTING LIQUID INTO FOOD OBJECTS**
VORRICHTUNG ZUM EINSPRITZEN VON FLÜSSIGKEIT IN LEBENSMITTEL
APPAREIL POUR L'INJECTION DE LIQUIDE DANS DES OBJETS ALIMENTAIRES

(30) Priority: 11.07.2006 IS 8527
(43) Date of publication of application: 22.04.2009
(73) Proprietor: Raf Ehf., 600 Akureyri (IS)
(72) Inventor: PETURSSON, Arni Bergmann, IS-600 Akureyri (IS)
(74) Representative: Arnason Faktor
(86) International application number: PCT/IS2007/000017
(87) International publication number: WO 2008/007393

(56) References cited:
- EP-A- 0 297 592
- WO-A-83/02547
- WO-A-2005/020696
- AU-B2- 493 070
- US-A- 4 620 478
- US-A- 5 638 746
- US-A1- 2005 077 254

## Description

### Technical Field

The present invention relates to an apparatus for use in the food industry, for injecting liquid into food objects.

### Background Art

EP0297592B1 Discloses an apparatus for injecting brine, pickle or another liquid into a piece of food through groups of hollow needles, which are plunged into various parts of said piece of food. Different amounts of liquid are injected through said groups of needles in dependency of estimated liquid absorbing characteristics of the respective parts of the piece of food, so as to obtain a substantially uniform distribution of the brine or liquid therein. Pressurized liquid may be supplied to each group of needles from a common source through a liquid valve, and the amount of liquid injected into the various parts of the piece of food may then be controlled by controlling the pressure of the liquid supplied to said group of needles by adjusting the valve. Such adjustment may be controlled by an electronic control device comprising a micro processor.

EP1402783B1 Discloses an apparatus having multiple retractable needles for injecting pieces of meat and the injecting needle for same, said head comprising a liquid supply chamber. Injecting needles extend through the supply chamber. Said needles are provided with a penetration point, a passage, which communicates with the injection openings located close to the point, and a distal end, far from the point, which is provided with a limiting piece. The distal end is disposed opposite elastic retaining means that can be used to draw the needle back if said needle comes into contact with a bone in the piece of meat to be injected. The supply chamber comprises numerous parallel, interconnected and elongated conduits through which certain sections of the needles can be guided to slide. Said conduits are provided with a diameter greater than that of said sections and means for sealing and guiding/centering said sections at the inlet and outlet of each conduit. The needles comprise opposing openings which communicate with said passage, said openings being disposed in an area of said section at a distance from the limiting piece that is approximately equal to the length of the conduit.

### Summary of the Invention

There are mainly three problems with prior art methods of injecting liquid into food objects as well as pre and post processing of such food objects. Firstly, all prior art methods suffer from the problem of too harsh mechanical and/or manual handling of the objects. Secondly, all prior art methods suffer from maintaining the liquid inside the food product after the processing since the product is stacked one of top of the other causing the liquid to be pressed out of the product in the lower layers. Thirdly, all prior art methods suffer from lack of quality of the end product due to impurities injected into the product. The present invention minimizes these problems by providing an apparatus for injecting liquid into food objects, where the fluid is sifted before it is injected by a sift apparatus. The apparatus of injecting liquid into food objects is computer controlled with increased accuracy of penetrating the food objects and the conveyor used to transport the belt in and out of the injection site is intermittently moved. Furthermore, the movement of the belt is coordinated with the injection means through the computer. The sift apparatus has a unique design in that a perforated cylindrical drum is rotated and the holes prevent scales, blood clogs, parasites etc from penetrating and clog the needles of the injecting apparatus. The present invention further provides a tray system, where the food objects are transported through the whole processing on trays which reduces manual labor and results in a more valuable and presentable final product. Moreover, the present invention can inject liquid into the product of any desired density without any mechanical adjustments. The blending means, this sifting means and the apparatus for injecting liquid into food objects are all controlled and coordinated by the control computer for optimal control as well as efficient and gentle handling of the food objects, which increases the value of the food products.

### Disclosure of the Invention

In the first aspect the present invention discloses an apparatus for injecting liquid into food objects, the apparatus is comprised of a frame, an endless belt, means for propelling the endless belt, for conveying the food objects in substantially horizontal direction, a loading station, wherein the food objects to be processed are loaded onto the endless belt, one or more needle for penetrating the food objects, a needle holder for holding the one or more needle, blending means for blending together substances to create the liquid, supply means for supplying the liquid to the needle, a means for moving the needle holder in, wherein the needles injects the liquid into the food objects while communicating with the food objects, an unloading station, wherein the food objects are unloaded, after being processed, from the endless belt, means to sift the liquid, control means, wherein the control means controls the blending means for blending together plurality of substances to create the liquid based on predetermined recipes selected by the control means in response to an input from operator.

In the a second aspect the present invention discloses a sift apparatus comprising a tub, a rotating cylindrical part with plurality of through holes distributed over the surface and a scraping mechanism located on each side of the cylindrical part substantially close to the center line of the cylindrical part. The sifting means also comprises an inlet compartment on one side of the cylindrical part, where the liquid is directed from the apparatus into the sift and a collecting compartment on the other side of the cylindrical part, where heavy impurities are collected from the liquid as they sink to the bottom of the compartment. A bypass means is also provided for redirecting sifted liquid from the collecting compartment to the inlet compartment and an overflow means, where light impurities floating on the top of the liquid are directed out of the system. The sifting means also comprises an outlet compartment at one end of the tub, where sifted liquid is redirected back to the apparatus.

In a third aspect of the present invention an apparatus for injecting liquid into food objects is provided as disclosed above including the sifting apparatus of the present invention. In this aspect, the sifting apparatus is controlled by the same control means as the apparatus for injecting liquid into food objects. The control means, such as a PC computer, controls the blending of the fluid to be injected into the food objects as well as blending liquid for optional post processing of the food objects after fluid injection. The blending of fluid for injection and post processing depends on predetermined recipes, which are specific for different types of food products. The recipes can be pre-programmed and stored in the computer control system and recalled at any time.

In a forth aspect of the present invention a method is provided for injecting fluid into food objects, where the method comprises the steps of:
- loading the food objects at a loading station onto an endless belt,
- conveying the food objects with the endless belt to an injecting means comprising one or more needles in a needle holder for penetrating the food objects,
- stopping the endless belt,
- blending substances to create the liquid for injecting into the food objects,
- supplying the liquid to the needle,
- sifting the liquid,
- moving the needle holder, wherein the needles inject the liquid into the food objects while communicating with the food objects,
- controlling the blending means by a control means to create the liquid based on predetermined recipes selected by the control means in response to an input from operator.

The food objects are conveyed on the endless belt in variable length stepwise movements to inject the liquid into the food objects in a predetermined pattern and the endless belt is also moved intermittently or stepwise.

In a fifth aspect of the present invention a system is provided for processing food objects, where the system comprises:
- means for pre-processing,
- loading station,
- process control computer,
- storage means for substances,
- a means for blending said substances together to make substance of predetermined characteristics,
- an apparatus for injecting said substance of predetermined characteristic into said food objects,
- means for purifying said substance of predetermined characteristics,
- unloading station , and
- means for post-processing of said food objects.

All the embodiments disclosed here below relate to the apparatus, method and the system of the present invention.

In an embodiment of the present invention the apparatus for injecting liquid into food objects comprises a frame, an endless belt and a loading station, where the food objects to be processed are loaded onto the endless belt. The apparatus also comprises one or more needles for penetrating the food objects, a needle holder for holding one or more needle and blending means for blending together substances to create the liquid. The apparatus further comprises supply means for supplying the liquid to the needle, means for moving the needle holder, where the needles injects the liquid into the food objects while communicating with the food objects. An unloading station is also provided, where the food objects are unloaded after being processed from the endless belt and the food objects are conveyed from the loading station to the unloading station. The apparatus is also provided with means to sift the liquid and a control means for controlling the blending means when blending together a plurality of substances to create the liquid to be injected. The blending is based on predetermined recipes selected by the control means in response to an input from operator. In an embodiment of the present invention the endless belt is moved intermittently in variable length stepwise fashion, such that the belt moves the food objects a certain length and then stops. During the period, when the belt is not moving, the needles are moved down for injecting fluid into the food product and then moved up again before the belt moves the belt again a certain length. The endless belt is driven by a propelling means, which can be a two step propelling means controlled by the control means.

In an embodiment of the present invention the plurality of needles form an array of needles spanning the width of the endless belt and can be a four pronged needle assembly forming a substantially horizontally square footprint, wherein the end of the needles occupy the four corners of the square. The means for moving the needle holder can move the needle holder in substantially vertical or horizontal direction. The means for moving the needle holder is controlled by the control means.

The control means of the invention controls the depth of penetration of the needles into the food objects, the time period the needles are in communication with the food items and the control means further synchronizes together the needle holder and the propelling means. The blending means is also controlled by the control means and the liquid is blended together from one or more substances according to the predetermined recipes.

In an embodiment of the present invention the plurality of needles comprise a longitudinal passage or a plurality of transversal passages for delivering fluid into the food objects.

The control means of the present invention is a computer which controls the end-to-end process. The supply means is a pump controlled by the control means which regulates the pressure of the liquid entering the needles according to the present invention. The pressure of the liquid entering the needles is between 0.3 - 2.0 bar, such as 0.5-1.7 bar or 0.7-1.5 bar as well as 1.0-1.3 bar and wherein the accuracy of regulated pressure is 0.01bar.

According to the present invention the control means communicates with the operator via human machine interface, where the human machine interface is push button interface, wherein each push button represents certain end product based on the predetermined recipes. In a specific embodiment the human machine interface is a command prompt computer interface, where each available command prompt represents certain end product based on the predetermined recipes. In another embodiment the human machine interface is a graphical computer interface, wherein each available selection represents a certain end product based on the predetermined recipes. The human machine interface can also be a touch-screen interface. Moreover, the control means in one embodiment is networked and communicates with the operator via remote control.

In an embodiment of the present invention the propelling means is first pneumatic cylinder and ratchet mechanism. In a specific embodiment the control means controls the propelling movement of the first pneumatic cylinder.

According to an embodiment of the present invention, the means for moving the needle holder are second and third pneumatic cylinders, where the control means optionally controls the vertical movement of the second and third pneumatic cylinders.

In an embodiment of the present invention the food objects to be processed can be manually or automatically loaded onto and/or unloaded from the endless belt.

In an embodiment of the present invention the food objects can be processed to remove minced meet from the product. The mince can be further minced in such a manner that it can be mixed with fluid with or without other substances and injected back into the meet by using the apparatus of the present invention.

In an embodiment of the present invention the blending means is controlled by the control means. The blending means of the present invention is used to control mixing of dry substances as well as liquid used for the post processing according to the predetermined recipes.

In an embodiment of the present invention the sifting of fluid comprises the steps of receiving fluid into the inlet compartment on one side of the cylindrical part of the sift means, where the liquid is directed from the apparatus into the sift. Next the fluid is pulled from the inlet compartment into the collecting compartment on the other side of the cylindrical part or drum of the sift means. The sift means comprises a plurality of through holes distributed over the surface which create the flow of liquid from inlet compartment to the collecting compartment, where heavy impurities are collected from the liquid as they sink to the bottom of the compartment. By applying scraping mechanism in the tub, which are located on each side of the drum substantially close to the center line of the drum, impurities are scraped off the drum. Thereafter, the sifted liquid is directed from the collecting compartment to the outlet compartment and light impurities floating on the top of the liquid are directed out of the system using the overflow means. Then the sifted liquid is redirected back to the apparatus from the outlet. In a specific embodiment the sifted liquid can be redirected to the inlet compartment using a bypass means.

During operation of the sift, the drum is rotated which causes the impure liquid in the tub to be pulled from the inlet compartment and over the drum to the collecting compartment. The liquid in the tub will penetrate the holes in the drum, whereas impurities will remain in the tub. The impurities, which become attached to the drum will be scraped off as disclosed above and in an embodiment of the present invention a spraying nozzle may be implemented over the drum in the collecting compartment for assisting with removal of impurities off the drum. The holes in the drum are advantageous over prior art sift means in that the prior art rotating sift means comprise longitudinal openings which allow impurities such as scales, parasites (nematodes etc) blood, liver pieces, fat and fibers to penetrate through or forced through by the scrape(s). This causes the needles of the prior art to clog easily and the color of the end product to be undesirable since the impurities such as blood clod, liver pieces, and parasites mix with the liquid and are injected into the product. The sift of the present invention is also capable of handling mince (minced meat) which is destined to be injected into meat by the apparatus of the invention.

In an embodiment of the present invention the perforated drum of the sifting apparatus is rotated and the holes in the drum are of sizes from 0.25 mm to 10 mm such as 0.65 - 5.0 mm, or 0.65 2.0 mm or 0.7 - 4.0 mm in diameter. The holes can have any shape such as, but not limited to circular triangular, rectangular, octagonal, hexagonal etc. The perforations in the drum cover between 15 - 40% of the area of the drum such as, but not limited to 20 - 30% or 23 - 25 %.

According to the present invention an optional post-processing means is provided, where the post-processing means is located at either side of the unloading station and where the post-processing is carried out in tubs. The blending means can be used to fill up the post-processing tubs and the processed food objects can be manually unloaded from the endless belt and placed in the post-processing tub. Furthermore, the processed food objects can automatically be unloaded from the endless belt and placed in the post-processing tub.

In an embodiment the pre-processing comprises arranging food objects onto the conveyor at the loading station or at pre-processing area before the loading station, where the pre-processing and post processing comprises optionally an area and/or a dynamic scale located before the loading station. In a specific embodiment pre-processing comprises arranging food objects into trays at the pre-processing and unloading the food objects area either manually or automatically. The blending means for post-processing can be a pump for mixing liquid substances or one or more scales and mixer for mixing dry substances. A mincing means is also provided for mincing food objects where one of the substances to be injected is minced food objects. In one embodiment the process control computer receives in-weighing signal from the dynamic scale located before the loading station and out-weighing signal from the dynamic scale located after the unloading station for controlling the process of injecting liquid into food objects. The process control computer can further control the density of injection according to in-weighing and out-weighing signals received as well as controlling time needles communicate with the food objects and injection pressure according to in-weighing and out-weighing signals received.

In an embodiment the food objects are pre processed before they are injected with liquid and then placed in trays before the liquid injection and post treatment of the food products. In this manner, the operator places the food product in a tray and sends the tray to the loading station. The loading station optionally comprises a scale, which weighs the tray before the fluid is injected into the food product. The tray is then transported by the endless belt under the needle holder and fluid is injected into the food products as the tray is transported in a variable length stepwise fashion according to the desired injection pattern towards the unloading station. The unloading station optionally comprises a scale, which weighs the tray after the fluid has been injected into the food product and can therefore feed information regarding this part of the processing to the control unit. Several options of post processing are then possible to be carried out in the trays which both reduce manual labor and handling of the food products. One such post processing is placing the trays in tubs containing liquid. Thus, maintaining the product in liquid for some desired time period for marinating the outside of the product. Then the trays are placed on top of each other in the tub, without pressing onto the food products in the tray below, allowing the liquid to flow freely around the products in the tray. The try system will prevent pressure from products stacked in such a tub to press liquid and other substances out of the product underneath. Another post processing process is dry marinating the food products. Then the products are covered with desired mixture of dry substances, such as salt and spices, in the trays and the trays stacked one on top of the other for a period of time without other food objects pressing onto food objects underneath or causing uneven marinating of the food objects in the trays. The trays used in the present invention can be perforated such that when they are placed in tubs with fluid, it will be easy to transport them in and out of the tub and when they are removed from the tub the fluid will remain in the tub. The tray also solves the problem of further processing and weighing the food objects in that the food objects are placed in the tray by a worker, which can ensure that the food objects do not overlap in the tray for remaining processing steps. This reduces the harsh handling of the product significantly since the product is placed in the trays once and there after stays in the trays until packing of the final product. Furthermore, the apparatus can be adjusted in such a manner that the tray only activates the scale when it is correctly placed on the scale. Thereby the problem of errors in dynamic scales is solved in processing lines when part of the food objects overlap with the conveyor belt or two or more food objects overlay and give incorrect values of weight.

According to the method of the present invention the injecting means is moved while in communication with the food objects and the conveying of the food objects in a variable stepwise motion is computer controlled according to some predetermined recipes.

In an embodiment of the present invention the food objects are items such as, but not limited to fish fillets, red meet pieces, poultry pieces etc.

### Brief Description of Drawings

Figure 1, shows a top view of the liquid injecting apparatus.

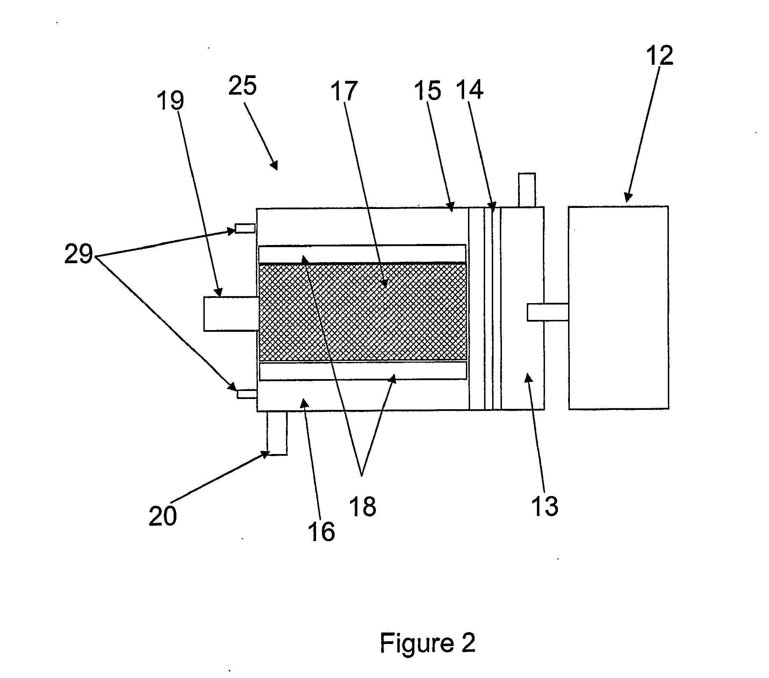

Figure 2, shows a top view of the sift.

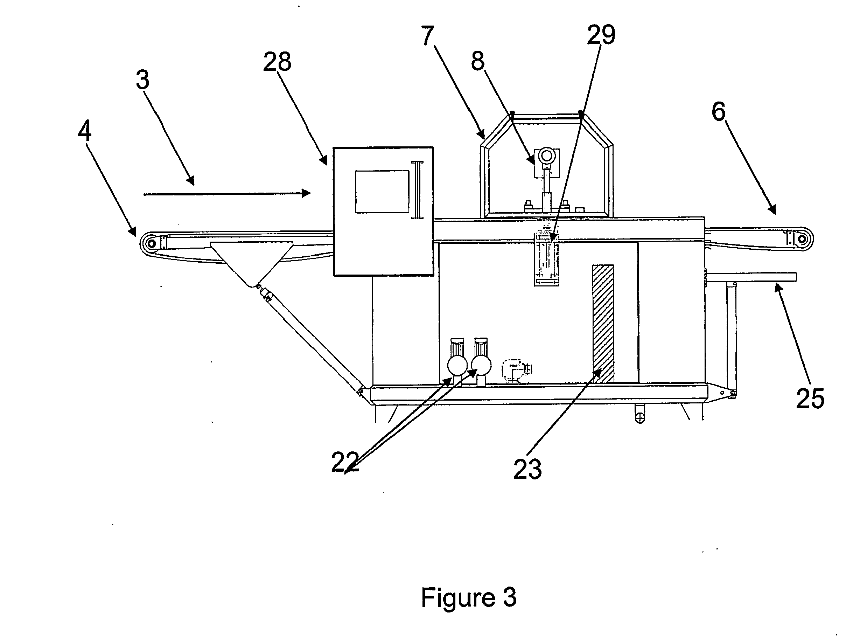

Figure 3, shows a side view of the liquid injection apparatus.

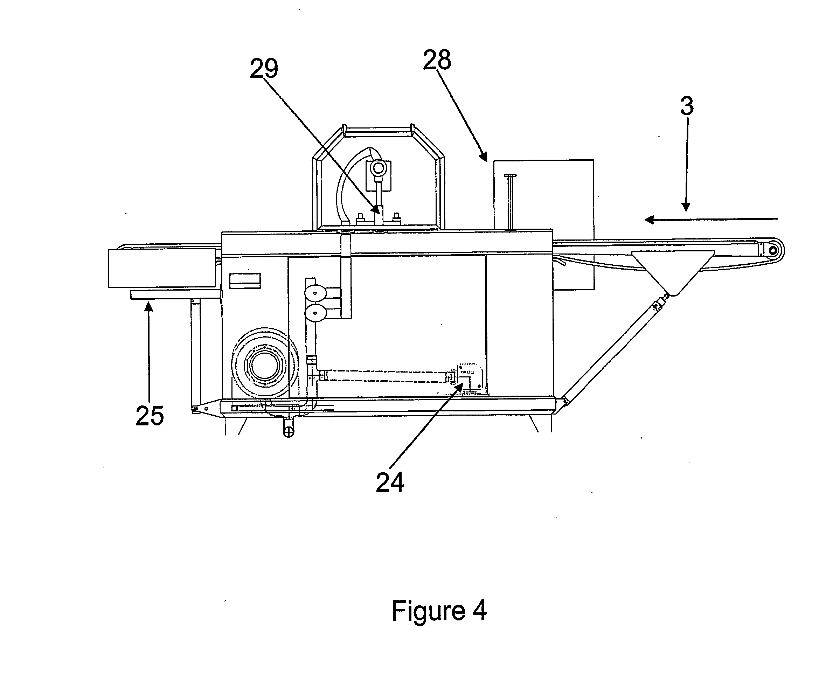

Figure 4, shows the other side of the liquid injection apparatus.

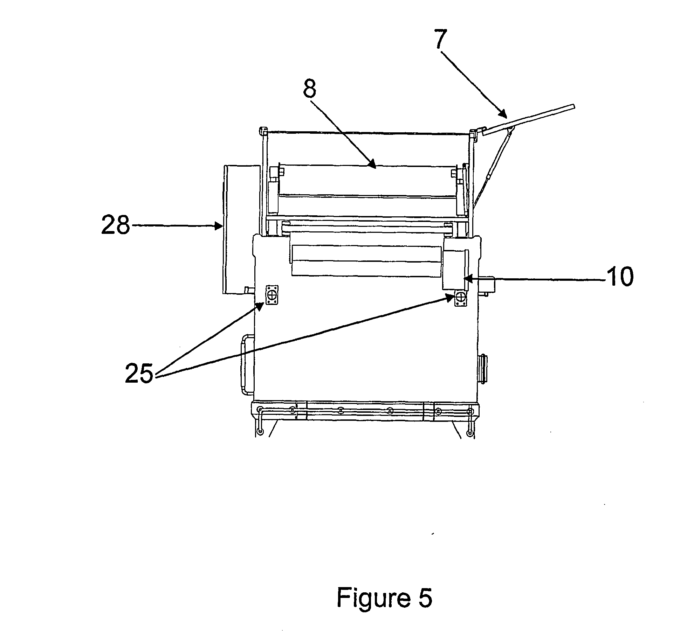

Figure 5, shows the end of the injecting apparatus where the un-loading station is.
Figure 6, shows a sample of possible needles to use with the injection apparatus

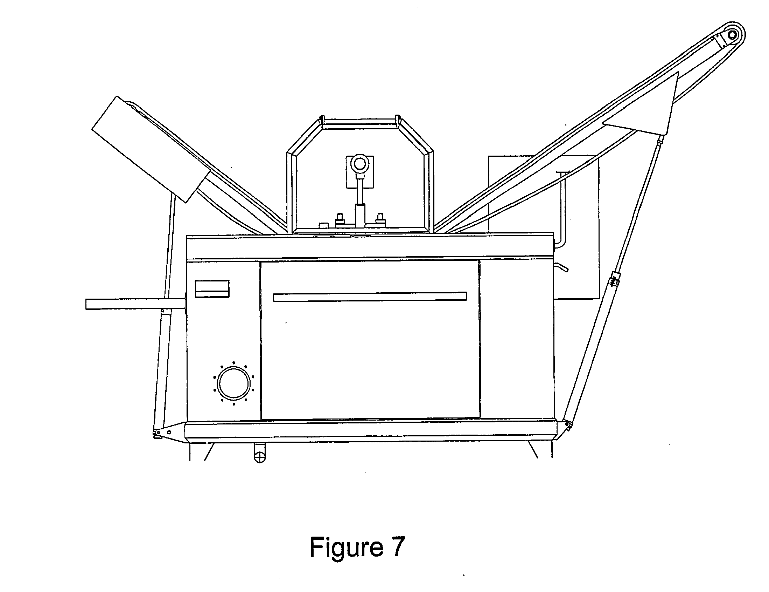

Figure 7, shows the liquid injection apparatus in a cleaning position.
Figure 8, shows a top view of the liquid infecting apparatus with food objects on trays.
Figure 9, shows a side view of the liquid injection apparatus with food objects on trays.

### Detailed Description of the present invention

The present invention discloses an apparatus and system for processing food products. The implementations of the invention being described in the following text can obviously be varied in many ways. Such variations are not to be regarded as a departure from the spirit and scope of the present invention, and all such modifications as would be obvious to one skilled in the art are intended to be included within the scope of the following claims. The invention will be described in detail with reference to the following figures.

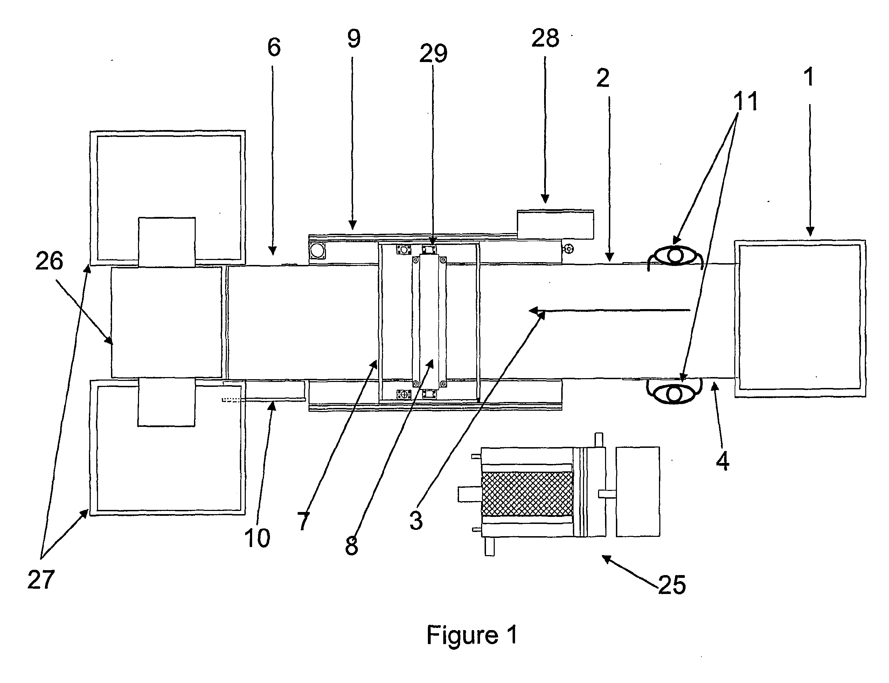

Figure 1 shows a top view of a processing line for processing food products. For the sake of clarity, the embodiment described, and the scenario selected is selected from the fish processing industry. The in-feed means (1) can be a conveying means were fish to be processed arrives. The fish can be at any viable processing stage, i.e. whole fish, fillets, and so on. In stead of an in-feed conveyor a simple tub with could be used as an in-feed bin. The apparatus disclosed has one endless belt (2) mounted to a frame (9) for conveying the fish through processing in the direction of the arrow (3). However, one or more conveying means could be used for the same purpose. Let's call the end of the conveyor where the supply means (1) is located a "Loading Station" (4), the location where the fish is processed a "Processing Station" (5), and the end where the fish is discharged an "Unloading Station" (6). Means for arranging (11) the fish to be processed is located at the loading station (4). This could be for example one or more robots, some machinery specifically made for that purpose, or simply a manual labor. The goal is to arrange the fish on the conveyor (2) in a uniform manner to obtain maximum throughput and uniform processing of each and all food objects processed.

Means for propelling (10) the conveyor is provided. The propelling means is computer (28) controlled and provides an adjustable stepwise movement of the conveyor belt. In this embodiment is adjustable stroke pneumatic cylinder and a ratchet mechanism, but other implementations are also applicable and easy to implement for someone skilled in the art. The fish travels on the conveyor (2) in the direction of the arrow (3) to the processing station (5). For safety and work-condition reasons the processing station could optionally be provided with a splash and safety guard (7). This is, however, not necessary for the implementation of the present invention.

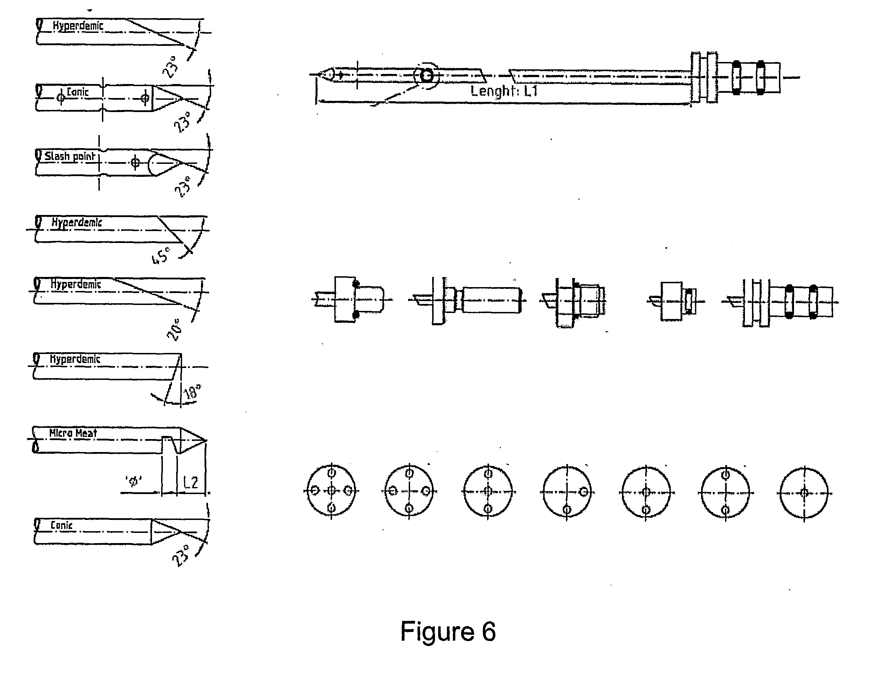

Means for processing (8) the fish is provided at the processing station (5), and will now be described in some detail. The means for processing the fish is a holder with one or more needles which forms an array of needles spanning the width of the endless belt. In this embodiment a four pronged needle assembly, where the end of the needles, occupy the four corners of a square forms a substantially horizontally square footprint. However, different needle assemblies could be used such as shown in figure 6. The means for moving the needle holder in substantially vertical direction is computer controlled, wherein the control means controls the depth of penetration of the needles into fish flesh. Moreover, the control means controls the time period of which the needles are in communication with the fish objects (food items). The needle holder is moved in substantially vertical direction by the means of a pair of pneumatic cylinders (29). Other implementations are, of course, also applicable and easy to implement for someone skilled in the art.

The computer control means synchronizes together the movement of the needle holder and the movement of the propelling means. Such that the conveying means is in stand still while the needles are in communication with the fish flesh.

The computer control, moreover, controls the blending together of the various substances to create a liquid which is injected into the fish flesh by controlling substance pumps (22) and substance valve system (23). How the liquid is created depends on the desired end product. The operator selects the desired end product from a selection of choices, which the computer system presents to him via GUI (Graphical User Interface), by simply tapping an icon on a touch-screen. In the memory of the computer control means is stored a library of recipes which is selected from depending on the end product selected by the operator. Other types of Human Machine Interface could also be easily implemented by someone skilled in the art. Such implementation variations are not to be regarded as a departure from the spirit and scope of the present invention, and all such modifications as would be obvious to one skilled in the art are intended to be included within the scope of the following claims. Substances pumped from one or more substance storage tanks (not shown on drawings) based on the recipe associated with the end product selected by the operator to a mixing tank (12).

A supply means for supplying the liquid to the needles is also provided. The supply means is a computer controlled pump (24) which is capable of regulating the pressure of the liquid entering the needles in the range of 0.3 - 2.0 bar at the accuracy of 0.01bar. The supply means runs continuously while processing each batch. Therefore, the needles are not in communication with the fish flesh all the time and the liquid is sprayed through the needles over the fish flesh. The excess liquid which is not captured in the fish flesh is circulated from the apparatus to a means for sifting (25) the liquid.

The sift (25) has a tub with a rotating perforated cylindrical drum (17), scraping mechanism (18), and a filter (14). The drum is rotated by the rotating means (19) which may be implemented in different ways by someone skilled in the art. This embodiment uses pneumatic motor (19). The tub forms three compartments, an inlet compartment (15), a collecting compartment (16), and an outlet compartment (13). The scraping mechanism (18) is located on each side of the drum substantially close to its center line. The inlet compartment (15) communicates with and receives the liquid from the apparatus. The drum rotates such that the surface closest to the inlet compartment moves in upward direction and the surface closest to the collection compartment moves in downward direction. The scraping mechanism (18) is mounted in the inlet and collecting compartments with tight tolerances with respect to the drum.

Impurities such as scales which inevitably enter the inlet compartment with the liquid get transferred by the drum as it rotates from the inlet compartment to the collecting compartment where the scraper scrapes the impurities of the drum as the drum rotates past the scraper. In the collecting compartment heavy impurities are collected from the liquid as they sink to the bottom of the compartment, while lighter impurities such as liver which floats on top of the liquid are directed from the collecting compartment via overflow means (20). A bypass (29) is also provided for redirecting sifted liquid from the collecting compartment to the inlet compartment, this prevents the collecting compartment to overfill during harsh conditions and at the same time provide for multiple passes of the liquid through the sift.

An outlet compartment (13) is provided at one end of the tub where the sifted liquid is redirected back to the apparatus. The outlet compartment is separated from the drum by a filter insert (14). The outlet compartment communicates with the suction side of the supply pump (24).

Now, after the liquid has been injected into the fish flesh, according to the recipe selected by the computer according to the end product selected by the operator, the fish is transferred to the unloading station. At the unloading station the fish is unloaded from the apparatus. This could be done for example by one or more robots, some machinery (26) specifically made for that purpose, or simply a manual labor. Optionally, the newly processed fish could undergo some post-processing treatment. In that case the tubs (27), on either or both sides of the apparatus, are filled with a liquid created by mixing together various substances. Mixing of the substances is done automatically by one or more computer controlled pumps (22) and substance valve system (23) according to recipes selected by the computer according to the end product selected by the operator. Sensors automatically monitor the size of, and content in, the tubs and the computer instruct the operator to replace tubs as needed.

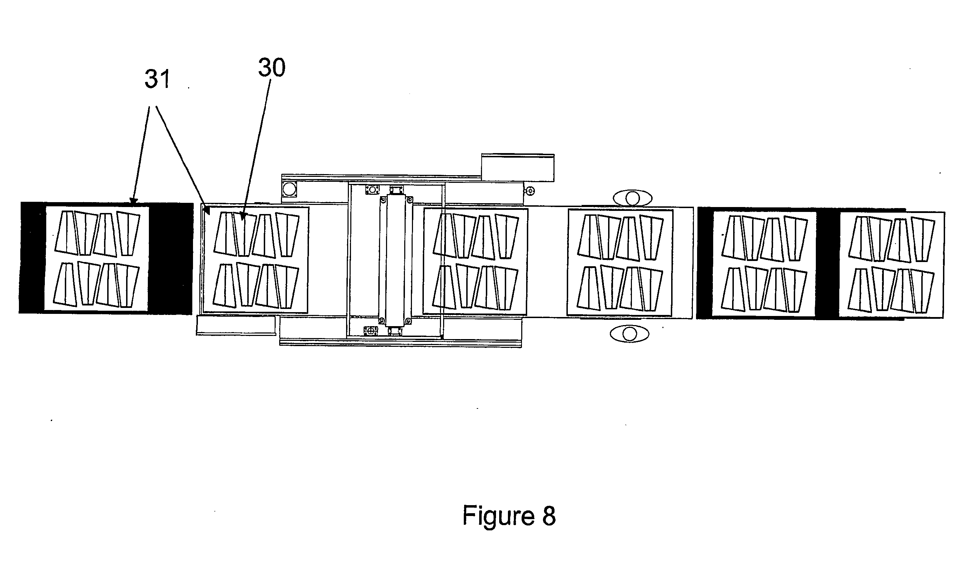

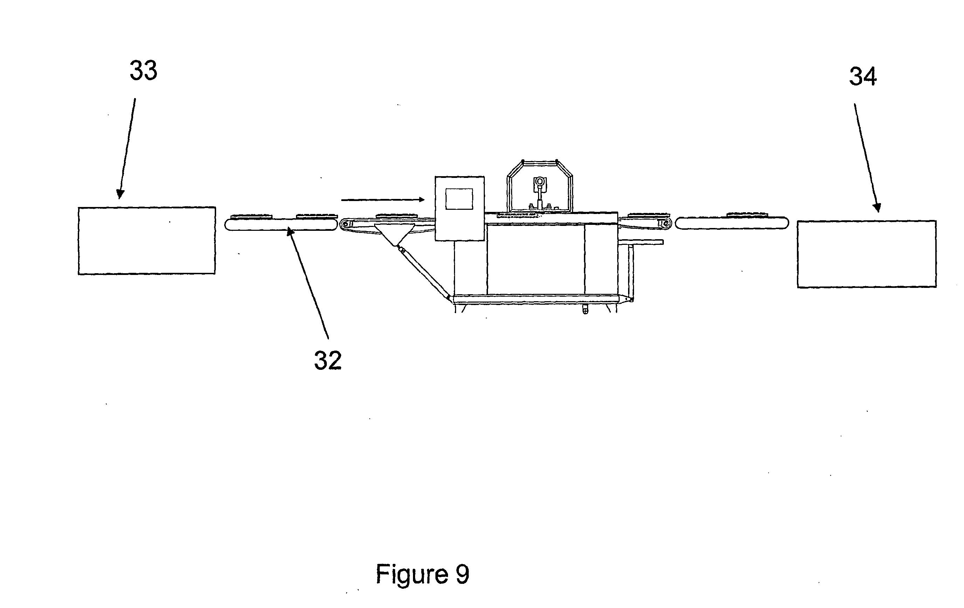

Figures 8 and 9 show a specific embodiment of the present invention, where the food objects (30) are delivered to the loading station on trays (31). The loading station further comprises a scale (32) for weighing the objects before the liquid is injected into the food. The food objects are then transported on the tray on the endless belt under the needle holder, where the liquid is injected into the food objects. The tray is then transported to the unloading station, which also comprises a scale for weighing the objects after the liquid is injected into the food. By using the tray system, the food objects can be transported through a food processing process on the trays which minimizes manual labor and offers automated solutions in stacking and transporting the objects. After the liquid is injected into the food objects, the trays can be stacked in such a manner that no pressure is applied onto the food objects in the tray. This is a problem with conventional methods where food objects are processed and then staked, which results in that liquid is pressed out of the food items in the bottom layers of the stack. The trays can also be stacked in containers with liquid, thereby allowing all food objects to be equally soaked in the liquid. Figure 9 further shows embodiments of optional pre-processing means/station (33) and (post-processing means/stations (34) for the liquid injecting apparatus,

## Claims

1. An apparatus for injecting liquid into food objects, said apparatus comprising:
- a frame,
- an endless belt,
- a loading station, wherein said food objects to be processed are loaded onto said end less belt,
- one or more needles with for penetrating said food objects, a needle holder for holding said one or more needle,
- blending means for blending together substances to create said liquid,
- supply means for supplying said liquid to said needle,
- a means for moving said needle holder, wherein said needles injects said liquid into said food objects while communicating with said food objects,
- an unloading station, wherein said food objects are unloaded after being processed from said endless belt,
- means for propelling said endless belt, for conveying said food objects from said loading station to said unloading station,
- means to sift said liquid,
- control means, said control means controls said blending means for blending together plurality of substances to create said liquid based on predetermined recipes selected by said control means in response to an input from operator, and
**characterized in that** the movement of the belt is coordinated with the injection means through the control means.

2. An apparatus according to claim 1, wherein said propelling means is a two step propelling means controlled by said control means.

3. An apparatus according to claims 1 or 2, wherein said plurality of needles form an array of needles spanning the width of said endless belt.

4. An apparatus according to any of the preceding claims, wherein said needles comprise a longitudinal passage delivering fluid into the food objects.

5. An apparatus according to any of the preceding claims, wherein said needles comprise a plurality of transversal passages for delivering fluid into the food objects.

6. An apparatus according to any of the preceding claims, wherein said blending means is controlled by the control means.

7. An apparatus according to any of the preceding claims, wherein said control means is networked and communicates with the operator via remote control.

8. An apparatus according to any of the preceding claims, wherein the intermittent movement of the end less belt is a variable length stepwise movement.

9. An apparatus for sifting liquid, wherein the sifting apparatus comprises:
- tub,
- a rotating cylindrical part with plurality of through holes distributed over the su rface,
- scraping mechanism located on each side of said cylindrical part substantially close to the center line of said cylindrical part,
- inlet compartment on one side of said cylindrical part, wherein said liquid is directed from said apparatus into said sift,
- a collecting compartment on the other side of said cylindrical part, wherein heavy impurities are collected from said liquid as they sink to the bottom of said compartment,
- a bypass means for redirecting sifted liquid from said collecting compartment to said inlet compartment,
- an overflow means, wherein light impurities floating on the top of the liquid are directed out of the system,
- an outlet compartment at one end of the tub,
- wherein sifted liquid is redirected back to the apparatus.

10. A method for injecting fluid into food objects comprising the steps of:
- loading said food objects at a loading station onto an endless belt,
- conveying said food objects with said endless belt to an injecting means comprising one or more needles in a needle holder for penetrating said food objects,
- stopping said endless belt,
- blending substances to create said liquid for injecting into the food objects,
- supplying said liquid to said needle,
- sifting said liquid,
- moving said needle holder, wherein said needles inject said liquid into said food objects while communicating with said food objects,
- controlling said blending means by a control means to create said liquid based on predetermined recipes selected by said control means in response to an input from operator,
**characterized in that** the conveying of the food objects is coordinated with the moving of the needle holder through the control means.

11. A method according to claim 10, wherein sifting said fluid comprises the steps of:
- receiving fluid into the inlet compartment on one side of said cylindrical part of the sift means, wherein said liquid is directed from said apparatus into said sift,
- pulling said fluid using the cylindrical part of the sift means with a plurality of through holes distributed over the surface directing the fluid into the collecting compartment on the other side of said cylindrical part, wherein heavy impurities are collected from said liquid as they sink to the bottom of said compartment,
- applying scraping mechanism, located on each side of said cylindrical part substantially close to the center line of said cylindrical part, to scrape impurities off the cylindrical part
- directing sifted liquid from said collecting compartment to a outlet compartment,
- directing light impurities floating on the top of the liquid out of the system using the overflow means,
- redirecting the sifted liquid back to the apparatus from the outlet.

12. A system for processing food objects comprising:
- means for pre-processing,
- conveying means
- loading station,
- process control computer,
- storage means for substances,
- a means for blending said substances together to make substance of predetermined characteristics,
- an apparatus for injecting said substance of predetermined characteristic into said food objects,
- means for purifying said substance of predetermined characteristics,
- unloading station,
- means for post-processing of said food objects,
**characterized in that** the conveying means is coordinated with the moving of the apparatus for injecting said substance of predetermined characteristic into said food objects through the control means.

13. A system for processing food objects according to claim 12 further comprising a mincing means for mincing food objects.

14. A system for processing food objects according to claims 12 - 13 wherein a process control computer controls the density of injection according to in-weighing and out-weighing signals received.

15. A system for processing food objects according to claims 12 - 14 wherein the food objects are transported through the whole processing on trays.

## Patentansprüche

1. Vorrichtung zum Einspritzen von Flüssigkeit in Lebensmittel, wobei die Vorrichtung Folgendes umfasst:
- einen Rahmen,
- ein Endlosband,
- eine Ladestation, wobei die zu behandelnden Lebensmittel auf das Endlosband geladen werden,
- eine oder mehrere Nadeln zum Durchdringen der Lebensmittel mit einem Nadelhalter zum Halten einer oder mehrerer Nadeln,
- ein Mischmittel zum Vermischen von Stoffen zur Erzeugung der Flüssigkeit,
- ein Zufuhrmittel zum Zuführen der Flüssigkeit zu der Nadel,
- ein Mittel zum Bewegen des Nadelhalters, wobei die Nadeln unter Verbindung mit den Lebensmitteln die Flüssigkeit in die Lebensmittel einspritzen,
- eine Entladestation, wobei die Lebensmittel nach der Behandlung von dem Endlosband entladen werden,
- ein Mittel zum Antreiben des Endlosbands, zum Befördern der Lebensmittel von der Ladestation zur Entladestation,
- ein Mittel zum Sieben der Flüssigkeit,
- ein Steuermittel, wobei das Steuermittel das Mischmittel zum Vermischen mehrerer Stoffe zur Erzeugung der Flüssigkeit auf Grundlage von vorbestimmten Rezepten, die durch das Steuermittel als Reaktion auf eine Eingabe von einem Bediener ausgewählt werden, steuert, und
**dadurch gekennzeichnet, dass** die Bewegung des Bands durch das Steuermittel mit dem Einspritzmittel koordiniert wird.

2. Vorrichtung nach Anspruch 1, wobei das Antriebsmittel ein zweistufiges Antriebsmittel ist, das durch das Steuermittel gesteuert wird.

3. Vorrichtung nach Anspruch 1 oder 2, wobei die mehreren Nadeln eine Anordnung von Nadeln bilden, die die Breite des Endlosbands überspannen.

4. Vorrichtung nach einem der vorhergehenden Ansprüche, wobei die Nadeln einen Längskanal bilden, der Fluid in die Lebensmittel zuführt.

5. Vorrichtung nach einem der vorhergehenden Ansprüche, wobei die Nadeln mehrere Querkanäle zur Zuführung von Fluid in die Lebensmittel umfassen.

6. Vorrichtung nach einem der vorhergehenden Ansprüche, wobei das Mischmittel durch das Steuermittel gesteuert wird.

7. Vorrichtung nach einem der vorhergehenden Ansprüche, wobei das Steuermittel vernetzt ist und über Fernsteuerung mit dem Bediener kommuniziert.

8. Vorrichtung nach einem der vorhergehenden Ansprüche, wobei die intermittierende Bewegung des Endlosbands eine schrittweise Bewegung mit variabler Länge ist.

9. Vorrichtung zum Sieben von Flüssigkeit, wobei die Siebvorrichtung Folgendes umfasst:
- einen Behälter,
- ein rotierendes, zylindrisches Teil mit mehreren Durchgangslöchern, die über die Fläche verteilt sind,
- einen Abkratzmechanismus, der auf jeder Seite des zylindrischen Teils im Wesentlichen nahe der Mittellinie des zylindrischen Teils positioniert ist,
- eine Einlasskammer auf einer Seite des zylindrischen Teils, wobei die Flüssigkeit von der Vorrichtung in das Sieb geleitet wird,
- eine Auffangkammer auf der anderen Seite des zylindrischen Teils, wobei schwere Verunreinigungen von der Flüssigkeit aufgefangen werden, während sie zum Boden der Kammer sinken,
- ein Umgehungsmittel zum Umleiten der gesiebten Flüssigkeit von der Auffangkammer zu der Einlasskammer,
- ein Überlaufmittel, wobei oben auf der Flüssigkeit schwimmende leichte Verunreinigungen aus dem System heraus geleitet werden,
- eine Auslasskammer an einem Ende des Behälters,
- wobei gesiebte Flüssigkeit zu der Vorrichtung zurück geleitet wird.

10. Verfahren zum Einspritzen von Fluid in Lebensmittel, das die folgenden Schritte umfasst:
- Laden der Lebensmittel an einer Ladestation auf ein Endlosband,
- Befördern der Lebensmittel mit dem Endlosband zu einem Einspritzmittel, das eine oder mehrere Nadeln in einem Nadelhalter zum Durchdringen der Lebensmittel umfasst,
- Anhalten des Endlosbands,
- Vermischen von Stoffen zur Erzeugung der Flüssigkeit zum Einspritzen in die Lebensmittel,
- Zuführen der Flüssigkeit zu der Nadel,
- Sieben der Flüssigkeit,
- Bewegen des Nadelhalters, wobei die Nadeln die Flüssigkeit in die Lebensmittel einspritzen, während sie mit den Lebensmitteln in Verbindung stehen,
- Steuern des Mischmittels durch ein Steuermittel zur Erzeugung der Flüssigkeit auf Grundlage von vorbestimmten Rezepten, die von dem Steuermittel als Reaktion auf eine Eingabe von dem Bediener ausgewählt werden,
**dadurch gekennzeichnet, dass** das Befördern der Lebensmittel durch das Steuermittel mit der Bewegung des Nadelhalters koordiniert wird.

11. Verfahren nach Anspruch 10, wobei Sieben des Fluids die folgenden Schritte umfasst:
- Empfangen von Fluid in der Einlasskammer auf einer Seite des zylindrischen Teils des Siebmittels, wobei die Flüssigkeit von der Vorrichtung in das Sieb geleitet wird,
- Ziehen des Fluids unter Verwendung des zylindrischen Teils des Siebmittels mit mehreren Durchgangslöchern, die über die Fläche verteilt sind und das Fluid in die Auffangkammer auf der anderen Seite des zylindrischen Teils leiten, wobei schwere Verunreinigungen von der Flüssigkeit aufgefangen werden, während sie zum Boden der Kammer sinken,
- Anwenden des Abkratzmechanismus, der auf jeder Seite des zylindrischen Teils im Wesentlichen nahe der Mittellinie des zylindrischen Teils positioniert ist, zum Abkratzen von Verunreinigungen von dem zylindrischen Teil,
- Leiten der gesiebten Flüssigkeit von der Auffangkammer zu einer Auslasskammer,
- Leiten leichter Verunreinigungen, die oben auf der Flüssigkeit schwimmen, aus dem System unter Verwendung des Überlaufmittels,
- Umleiten der gesiebten Flüssigkeit vom Auslass zu der Vorrichtung zurück.

12. System zur Behandlung von Lebensmitteln, das Folgendes umfasst:
- ein Mittel zur Vorbehandlung,
- ein Beförderungsmittel,
- eine Ladestation,
- einen Prozesssteuerungsrechner,
- ein Lagerungsmittel für Stoffe,
- ein Mittel zum Vermischen der Stoffe zur Herstellung eines Stoffes mit vorbestimmten Eigenschaften,
- eine Vorrichtung zum Einspritzen des Stoffes mit vorbestimmter Eigenschaft in die Lebensmittel,
- ein Mittel zum Reinigen des Stoffes mit vorbestimmten Eigenschaften,
- eine Entladestation,
- ein Mittel zur Nachbehandlung der Lebensmittel, **dadurch gekennzeichnet, dass** das Beförderungsmittel durch das Steuermittel mit der Bewegung der Vorrichtung zum Einspritzen des Stoffes mit vorbestimmter Eigenschaft in die Lebensmittel koordiniert wird.

13. System zur Behandlung von Lebensmitteln nach Anspruch 12, das weiterhin ein Zerkleinerungsmittel zum Zerkleinern von Lebensmitteln umfasst.

14. System zur Behandlung von Lebensmitteln nach den Ansprüchen 12 - 13, wobei ein Prozesssteuerungsrechner die Einspritzdichte gemäß empfangenen Einwiege- und Auswiegesignalen steuert.

15. System zur Behandlung von Lebensmitteln nach den Ansprüchen 12 - 14, wobei die Lebensmittel auf Schalen durch die gesamte Behandlung transportiert werden.

## Revendications

1. Appareil pour injecter un liquide dans des objets alimentaires, ledit appareil comprenant :
- un cadre,
- une courroie sans fin,
- un poste de chargement, lesdits objets alimentaires à traiter étant chargés sur ladite courroie sans fin,
- une ou plusieurs aiguilles destinées à pénétrer à travers lesdits objets alimentaires, un support d'aiguille pour retenir lesdites une ou plusieurs aiguilles,
- un moyen de mélange pour mélanger ensemble des substances pour créer ledit liquide,
- un moyen d'alimentation pour alimenter ladite aiguille en ledit liquide,
- un moyen pour déplacer ledit support d'aiguille, lesdites aiguilles injectant ledit liquide dans lesdits objets alimentaires tout en communiquant avec lesdits objets alimentaires,
- un poste de déchargement, lesdits objets alimentaires étant déchargés après avoir été traités depuis ladite courroie sans fin,
- un moyen pour faire avancer ladite courroie sans fin, pour transporter lesdits objets alimentaires depuis ledit poste de chargement jusqu'audit poste de déchargement,
- un moyen pour filtrer ledit liquide,
- un moyen de commande, ledit moyen de commande commandant ledit moyen de mélange pour mélanger ensemble une pluralité de substances pour créer ledit liquide sur la base de recettes prédéterminées choisies par ledit moyen de commande en réponse à une entrée d'un utilisateur, et
**caractérisé en ce que** le mouvement de la courroie est coordonné au moyen d'injection par le moyen de commande.

2. Appareil selon la revendication 1, dans lequel ledit moyen d'avance est un moyen d'avance à deux étapes, commandé par ledit moyen de commande.

3. Appareil selon la revendication 1 ou 2, dans lequel ladite pluralité d'aiguilles forme un groupe d'aiguilles réparties sur toute la largeur de ladite courroie sans fin.

4. Appareil selon l'une quelconque des revendications précédentes, dans lequel lesdites aiguilles comprennent un passage longitudinal distribuant du fluide dans les objets alimentaires.

5. Appareil selon l'une quelconque des revendications précédentes, dans lequel lesdites aiguilles comprennent une pluralité de passages transversaux pour distribuer du fluide dans les objets alimentaires.

6. Appareil selon l'une quelconque des revendications précédentes, dans lequel ledit moyen de mélange est commandé par le moyen de commande.

7. Appareil selon l'une quelconque des revendications précédentes, dans lequel ledit moyen de commande est mis en réseau et communique avec l'opérateur par télécommande.

8. Appareil selon l'une quelconque des revendications précédentes, dans lequel le mouvement intermittent de la courroie sans fin est un mouvement pas à pas de longueur variable.

9. Appareil pour filtrer un liquide, dans lequel l'appareil de filtrage comprend :
- un bac,
- une partie cylindrique rotative avec une pluralité de trous traversants répartis sur toute la surface,
- un mécanisme de raclage situé de chaque côté de ladite partie cylindrique substantiellement à proximité de l'axe central de ladite partie cylindrique,
- un compartiment d'entrée d'un côté de ladite partie cylindrique, ledit liquide étant dirigé depuis ledit appareil dans ledit filtre,
- un compartiment de collecte de l'autre côté de ladite partie cylindrique, des impuretés lourdes étant recueillies depuis ledit liquide à mesure qu'elles tombent au fond dudit compartiment,
- un moyen de dérivation pour rediriger le liquide filtré depuis ledit compartiment de collecte jusqu'audit compartiment d'entrée,
- un moyen de débordement, dans lequel des impuretés légères qui flottent à la surface du liquide sont évacuées hors du système,
- un compartiment de sortie à une extrémité du bac,
- dans lequel le liquide filtré est redirigé dans l'appareil.

10. Procédé pour injecter un fluide dans des objets alimentaires, comprenant les étapes consistant à :
- charger lesdits objets alimentaires au niveau d'un poste de chargement sur une courroie sans fin,
- transporter lesdits objets alimentaires avec ladite courroie sans fin jusqu'à un moyen d'injection comprenant une ou plusieurs aiguilles dans un support d'aiguille pour pénétrer à travers lesdits objets alimentaires,
- arrêter ladite courroie sans fin,
- mélanger des substances pour créer ledit liquide à injecter dans les objets alimentaires,
- alimenter ladite aiguille en ledit liquide,
- filtrer ledit liquide,
- déplacer ledit support d'aiguille, lesdites aiguilles injectant ledit liquide dans lesdits objets alimentaires tout en communiquant avec lesdits objets alimentaires,
- commander ledit moyen de mélange avec un moyen de commande pour créer ledit liquide sur la base de recettes prédéterminées choisies par ledit moyen de commande en réponse à une entrée d'un utilisateur,
**caractérisé en ce que** le transport des objets alimentaires est coordonné avec le déplacement du support d'aiguille par le biais du moyen de commande.

11. Procédé selon la revendication 10, dans lequel le filtrage dudit fluide comprend les étapes consistant à :
- recevoir du fluide dans le compartiment d'entrée d'un côté de ladite partie cylindrique du moyen de filtrage, ledit liquide étant dirigé depuis ledit appareil dans ledit filtre,
- aspirer ledit fluide en utilisant la partie cylindrique du moyen de filtrage avec une pluralité de trous traversants répartis sur la surface dirigeant le fluide dans le compartiment de collecte de l'autre côté de ladite partie cylindrique, des impuretés lourdes étant recueillies dudit liquide à mesure qu'elles tombent au fond dudit compartiment,
- appliquer un mécanisme de raclage, situé de chaque côté de ladite partie cylindrique, substantiellement à proximité de l'axe central de ladite partie cylindrique, pour racler les impuretés hors de la partie cylindrique,
- diriger le liquide filtré depuis ledit compartiment de collecte jusqu'à un compartiment de sortie,
- diriger les impuretés légères flottant à la surface du liquide hors du système en utilisant le moyen de débordement,
- et rediriger le liquide filtré dans l'appareil depuis la sortie.

12. Système pour traiter des objets alimentaires, comprenant :
- un moyen de pré-traitement,
- un moyen de transport,
- un poste de chargement,
- un ordinateur de commande de processus,
- un moyen de stockage pour les substances,
- un moyen pour mélanger lesdites substances ensemble pour créer une substance de caractéristiques prédéterminées,
- un appareil pour injecter ladite substance de caractéristiques prédéterminées dans lesdits objets alimentaires,
- un moyen pour purifier ladite substance de caractéristiques prédéterminées,
- un poste de déchargement,
- un moyen pour le post-traitement desdits objets alimentaires,
**caractérisé en ce que** le moyen de transport est coordonné avec le déplacement de l'appareil pour injecter ladite substance de caractéristiques prédéterminées dans lesdits objets alimentaires par le biais du moyen de commande.

13. Système pour traiter des objets alimentaires selon la revendication 12, comprenant en outre un moyen de hachage pour hacher des objets alimentaires.

14. Système pour traiter des objets alimentaires selon les revendications 12 et 13, dans lequel un ordinateur de commande de processus régule la densité d'injection en fonction de signaux de pesée d'entrée et de pesée de sortie reçus.

15. Système pour traiter des objets alimentaires selon les revendications 12 à 14, dans lequel les objets alimentaires sont transportés à travers l'ensemble du traitement sur des plateaux.
